# EUROPÄISCHE PATENTSCHRIFT

(11) **EP 1 544 499 B1**
(45) Veröffentlichungstag und Bekanntmachung des Hinweises auf die Patenterteilung: **16.09.2009**
(21) Anmeldenummer: 04029135.3
(22) Anmeldetag: 09.12.2004
(51) Int. Cl.: F16F 9/58

(54) **Stossdämpfer mit Anschlag**
Shock absorber with stop collar
Amortisseur avec bague de butée

(30) Priorität: 16.12.2003 DE 20319511 U
(43) Veröffentlichungstag der Anmeldung: 22.06.2005
(73) Patentinhaber: AL-KO KOBER AG, 89359 Kötz (DE)
(72) Erfinder: Friess, Gerhard, 48340 Amorebieta (ES)
(74) Vertreter: Ernicke, Hans-Dieter

(56) Entgegenhaltungen:
- WO-A-03/042550
- DE-C1- 19 944 758
- DE-U1- 8 301 051
- DE-U1- 9 404 863
- PATENT ABSTRACTS OF JAPAN Bd. 004, Nr. 064 (M-011), 14. Mai 1980 (1980-05-14) & JP 55 030501 A (KAYABA IND CO LTD), 4. März 1980 (1980-03-04)

## Beschreibung

Die Erfindung betrifft einen Stoßdämpfer für Fahrzeuge, insbesondere Schwerlastfahrzeuge, mit den Merkmalen im Oberbegriff des Hauptanspruchs.

Aus der DE 83 01 051 U1 ist ein Zweirohrschwingungsdämpfer bekannt, der ein Behälterrohr besitzt, in dem ein Zylinder mit einer Kolbenstangenführung und einer hohlen Kolbenstange angeordnet ist, welche am Ende eine Aufweitung zur Aufnahme einer Dämpfeinrichtung aufweist. Auf der Kolbenstange ist außen am Umfang ein Anschlagring als Zuganschlag für den Schwingungsdämpfer angeordnet, der mit der Frontseite der Kolbenstangenführung zusammenwirkt und an diese anschlägt.

Ein anderer Stoßdämpfer ist aus der DE 28 53 914 bekannt. Der im Stoßdämpfer enthaltene Arbeitszylinder hat einen Anschlag zur Begrenzung der Auszugbewegung der Kolbenstange. Dieser Anschlag wird von einer auf der Kolbenstange befestigten Anschlagscheibe und gebildet, die mittels eines an einer Umfangnut der Kolbenstange eingelassenen Ringes gehalten wird und die zur Auszugbegrenzung gegen die Kolbenstangenführung anschlägt. Aus der Praxis ist es außerdem bekannt, eine solche Anschlagscheibe an der Kolbenstange durch Schweißen oder auf andere Weise zu befestigen. Die vorbekannte Konstruktion ist bau- und platzaufwändig. Problematisch ist hierbei auch der an der Kolbenstangenführung auftretende Verschleiß.

Die DE 78 11 060 U1 zeigt einen Stoßdämpfer mit einem an der Kolbenstange angeordneten ringförmigen Zuganschlag, der am Ende der Auszugbewegung an einem der Kolbenstangenführung vorgeschalteten Ring anschlägt. Dieser Ring ist mehrteilig und besteht aus einem elastischen Anschlagring aus Gummi, der rückseitig an der Kolbenstangenführung anliegt und aus einem steifen Ring. Die beiden Ringe berühren sich über kegelförmige Stirnflächen. Im Anschlagfall soll sich der in den Zylinder eingeformte elastische Anschlagring verformen und in einen Freiraum zur Kolbenstange hin ausdehnen.

Es ist Aufgabe der vorliegenden Erfindung, einen Stoßdämpfer mit einem besseren Anschlag aufzuzeigen.

Die Erfindung löst diese Aufgabe mit den Merkmalen im Hauptanspruch.

Der Anschlag wird von einer an der Kolbenstangenführung befindlichen Anschlagschulter gebildet, die direkt mit dem an der Kolbenstange angebrachten Anschlagring zusammenwirkt. Der Anschlagring übernimmt dadurch selbst Anschlagfunktion. Diese Bauweise spart erheblich Platz, insbesondere in der Baulänge des Stoßdämpfers. Zudem wird die Konstruktion vereinfacht und verbilligt. Auch der Bau- und Montageaufwand wird gemindert.

Mittels einer zwischen der Anschlagschulter und der Führungsfläche angeordneten Deformationszone wird die Führungsfläche gegenüber Verformungen und Setzungserscheinungen geschützt. Insbesondere werden die im Dauerbetrieb unvermeidbaren Setzungen bzw. Verformungen, die der Anschlagring an der Kolbenstangenführung hinterlässt, absorbiert und von der Anschlagschulter aufgenommen. Durch diese Bauteilgeometrie wird der Kraftfluss in Anschlagstellung mit einer großen radialen Komponente übertragen und eine sonst. unvermeidbare "Einbettung" des Federrings durch die Deformationszone aufgefangen. Das erforderliche Bewegungsspiel zwischen Kolbenstange und Kolbenführung bleibt dadurch unbeeinträchtigt.

Die Anschlaggestaltung ist vor allem für Stoßdämpfer von Fahrzeugen von Vorteil, kann aber auch in anderen Anwendungsbereichen eingesetzt werden. Besondere Vorteile ergeben sich bei Schwerlastfahrzeugen, z.B. Lastkraftwagen und deren Anhängern, insbesondere Sattelaufliegern. Dies gilt speziell für den Fall, dass die Stoßdämpfer auch als Hubbegrenzung und als Fangeinrichtung bei Lastkraftwagen oder Anhängern eingesetzt werden, um u. a. sicherzustellen, dass die Achse immer mit dem Fahrzeug verbunden bleibt. Der Stoßdämpfer und der beanspruchte Anschlag werden hierbei dynamisch und statisch stark belastet. Durch die Anschlagkonstruktion werden Brüche zuverlässig vermieden, wobei sich außerdem bei hoher statischer Last im Sinne der Fangeinrichtung Verformungen vor allem im Bereich der Deformationszone ergeben und dort unschädlich sind.

In den Unteransprüchen sind weitere vorteilhafte Ausgestaltungen der Erfindung angegeben.

Die Erfindung ist in den Zeichnungen beispielsweise und schematisch dargestellt. Im Einzelnen zeigen:
- Figur 1:: Einen Stoßdämpfer in Seitenansicht,
- Figur 2:: einen Längsschnitt durch den Stoßdämpfer von Figur 1,
- Figur 3:: eine abgebrochene und vergrößerte Darstellung des Anschlagbereichs der Kolbenstange von Figur 2,
- Figur 4:: eine weiter vergrößerte Detaildarstellung des Bereichs IV von Figur 3 und
- Figur 5:: eine Variante zu Figur 4.

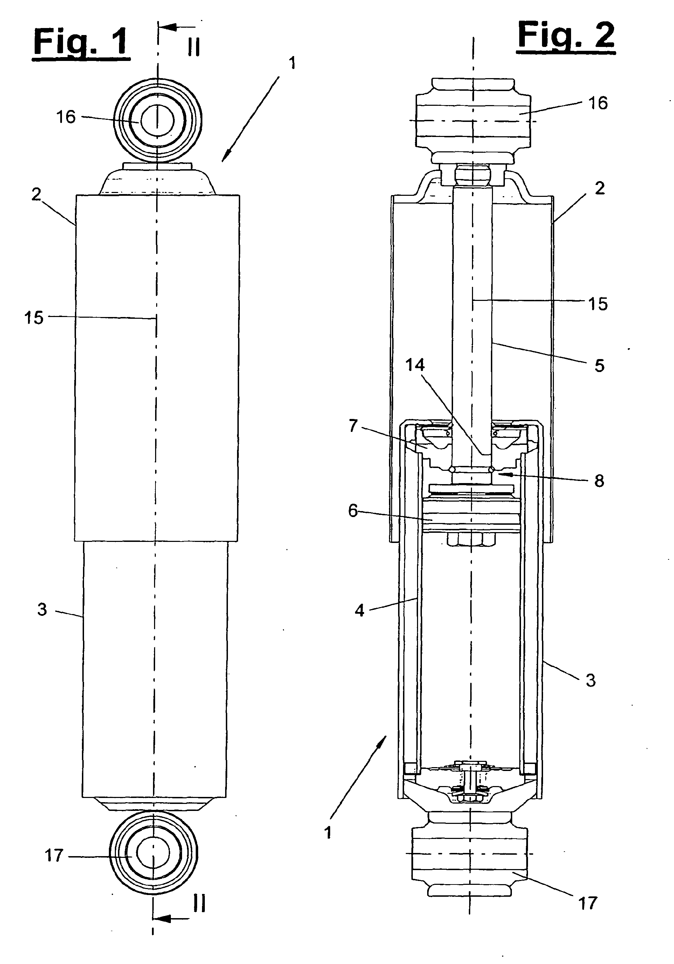

Figur 1 zeigt einen Stoßdämpfer (1), der vorzugsweise für Fahrzeuge, insbesondere für Schwerlastfahrzeuge eingesetzt werden kann. Der Stoßdämpfer (1) eignet sich besonders für Lastkraftwagen oder deren Anhänger, insbesondere Sattelauflieger. Der Stoßdämpfer (1) kann hierbei zur Hubbegrenzung und auch als Fangeinrichtung beim Versagen der Achsaufhängung benutzt werden.

Der Stoßdämpfer (1) wird in üblicher Weise mittels oberer und unterer Anschlüsse (16,17) mit der Achse bzw. der Radaufhängung und dem Fahrgestell verbunden. Der Stoßdämpfer (1) besteht aus zwei relativ zueinander in Richtung der Längsachse (15) beweglichen und einander teleskopartig umgreifenden Gehäuseteilen (2,3), von denen das eine Gehäuseteil (3) einen Arbeitszylinder (4), insbesondere einen hydraulischen Dämpfzylinder aufnimmt.

Im Zylinder (4) ist eine ein- oder mehrteilige Kolbenanordnung (6) mit einer Kolbenstange (5) angeordnet. Die Kolbenanordnung (6) ist im Zylinder (4) längs der Zylinderachse (15) beweglich geführt. Die Kolbenstange (5) ist in einer Kolbenstangenführung (7) am oberen Zylinderende längsbeweglich geführt und ragt hier aus dem Zylinder (4) und dem Gehäuse (3) heraus. Die Kolbenstange (5) ist am freien Ende mit dem anderen Gehäuseteil (2) bzw. im Anschluss (16) verbunden. Die Dämpfeinrichtung kann ansonsten von beliebiger und ggf. konventioneller Bauart sein.

Der Stoßdämpfer (1) besitzt einen Anschlag (8) für die Kolbenstange (5). Dieser Anschlag (8) kann zur Begrenzung der Ausziehlänge der Kolbenstange (5) dienen. Der Anschlag (8) wirkt zwischen der Kolbenstange (5) und der Kolbenstangenführung (7) und ist dabei räumlich sehr nahe an der Kolbenanordnung (6) angeordnet. Der Anschlagbereich braucht dadurch nur sehr wenig Platz.

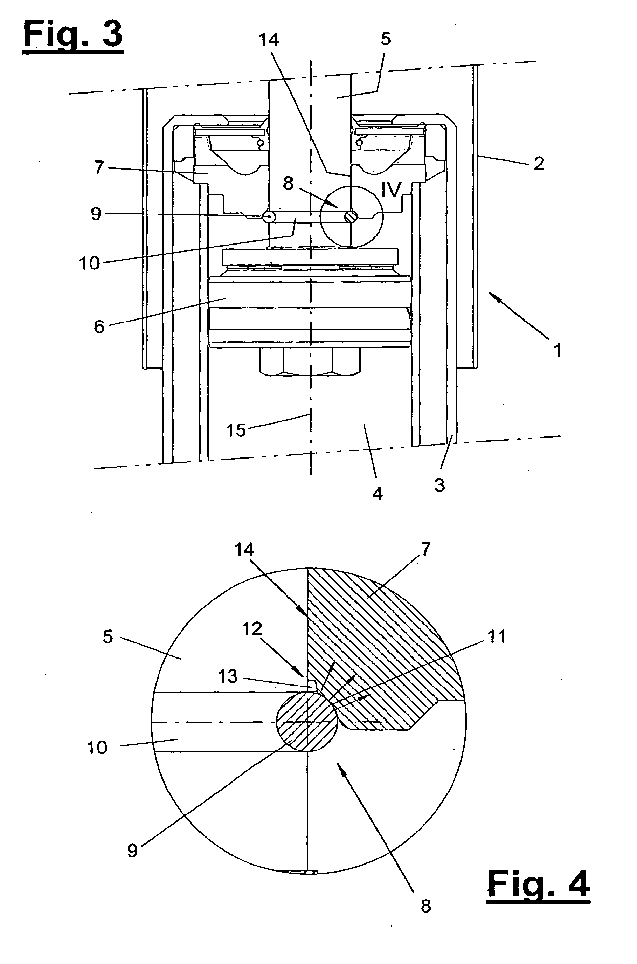

Die Detailgestaltung des Anschlags (8) ist in Figur 3 bis 5 dargestellt. Der Anschlag (8) besteht aus einem Sperrring oder Anschlagring (9) an der Kolbenstange (5) und einer Anschlagschulter (11) an der Kolbenstangenführung (7). Die Kolbenstange (5) schlägt dadurch mit dem Anschlagring (9) an der Kolbenstangenführung (7) an.

Der Anschlagring (9) ist z.B. in einer umfangseitigen Nut (10) der Kolbenstange (5) befestigt. Der Anschlagring (9) ist hierbei vorzugsweise als Federring ausgeführt und in die Nut (10) eingeclipst. Er wird hier formschlüssig gehalten und ragt etwa mit der Hälfte seines Umfangs nach außen über den Kolbenstangenumfang vor. Der Anschlagring (9) hat vorzugsweise einen kreisrunden Querschnitt, kann ansonsten aber auch eine andere, z.B. ovale oder prismatische Formgebung besitzen.

Die Anschlagschulter (11) ist an der Vorderseite der Kolbenstangenführung (7) angeformt oder als Einsatzteil angebaut und befindet sich in Auszugsrichtung ggf. mit Abstand vor der Führungsfläche (14) für die Kolbenstange (5). Die Anschlagschulter (11) erstreckt sich vorzugsweise umlaufend ringförmig und konzentrisch um die Zylinderachse (15) und besitzt eine im wesentlichen gerundete Schalenform, die an die Außenform des Anschlagringes (9) angepasst ist. Für diese Formanpassung gibt es verschiedene Möglichkeiten.

Die Anschlagschulter (11) bedeckt dabei z.B. weniger als ein Viertel des Außenumfangs des Anschlagringes (9). Die Schulterränder gehen vorzugsweise mit weichen Abrundungen in die angrenzenden Flächen der Kolbenstangenführung (7) über.

Die Schalenform der Anschlagschulter (11) kann gemäß Figur 4 für eine passgenaue Anlage vollständig der Außenform des Anschlagrings (9) entsprechen. Die Schalenform kann z.B. im Querschnitt kreisrund sein und die gleiche Krümmung wie der Außenumfang des Anschlagrings (9) haben. Entsprechend den vorgenannten Varianten der Ringform kann auch die Schalenform eine andere, z.B. ovale oder prismatische Formgebung besitzen.

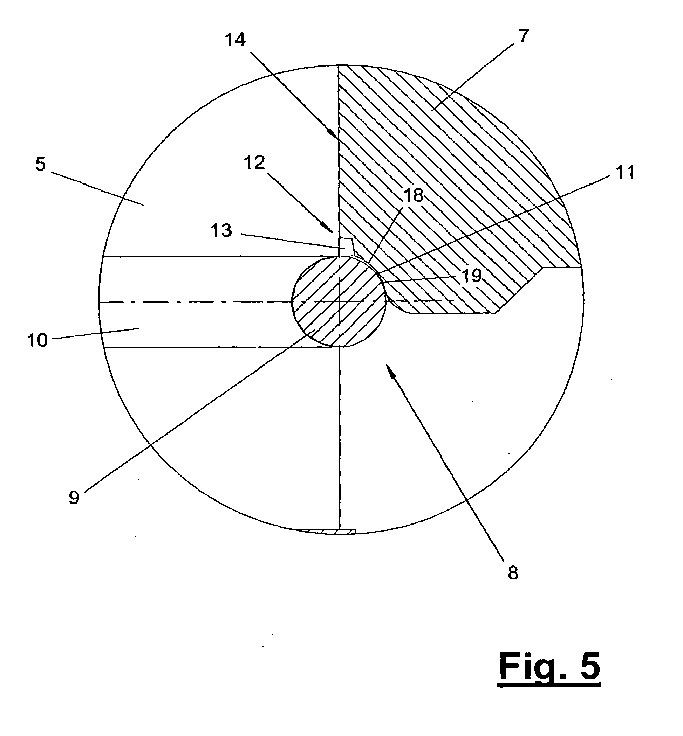

Alternativ kann gemäß Figur 5 die Schalenform der Anschlagschulter (11) nur bereichsweise der Außenform des Anschlagrings (9) entsprechen und zur Führungsfläche (14) bzw. zur Kolbenachse hin eine kleine Erweiterung (18) mit einer flacheren Krümmung haben, so dass der Anschlagring (9) wie in Figur 4 dargestellt, zunächst nur in einem Teilbereich (19) an der Schalenform anliegt. Die Erweiterung ist z.B. auf eine Verformung der Anschlagschulter (11) bei hoher Anschlagkraft ausgelegt, so dass dann bei Schulterverformung der Anschlagring (9) mit einer größeren Kontaktfläche optimal an der Schalenform anliegt.

Zwischen der Anschlagschulter (11) und der Führungsfläche (14) für die Kolbenstange (5) ist an der Kolbenstangenführung (7) eine ringförmige Deformationszone (12) mit einer ebenfalls ringförmigen Ausnehmung (13) angeordnet. Die zur Zylinderachse (15) konzentrische Ausnehmung (13) besitzt im Querschnitt eine Stufenform mit einer im Wesentlichen rechteckigen Gestalt. Die Ausnehmung (13) distanziert die Anschlagschulter (11) von der Führungsfläche (14) in axialer und radialer Richtung. Das innere Ende der Anschlagschulter (11) reicht dadurch nicht bis zum Außenumfang der Kolbenstange (5).

Durch diese Gestaltung des Anschlags (8) werden im Belastungs- und Anschlagfall die auftretenden Kräfte mit einer deutlichen radialen Komponente in die Kolbenstangenführung (7) eingeleitet. Figur 4 zeigt dies mit Richtungspfeilen. Dies dient der besseren Abstützung und auch der Entlastung der Führungsfläche (14). Durch die Ausnehmung (13) kann die Anschlagschulter (11) sich außerdem im Überlastfall verformen und dabei auch die axialen Kräfte aufnehmen, ohne dass hierdurch die Führungsfläche (14) in Mitleidenschaft gezogen oder gar beschädigt wird. Im Überlastfall ist dadurch auch der Abbau durch kontrollierte Verformung der Kolbenstangenführung (7) möglich, ohne das die Kolbenstangenführung (7) bricht. Hierbei können insbesondere die bei einem Versagen der Achsaufhängung auftretenden Kräfte aufgenommen werden.

Abwandlungen der gezeigten Ausführungsformen sind in verschiedener Weise möglich. Dies betrifft einerseits die Gestaltung der Stoßdämpferbauteile, aber auch den Anschlag selbst. Statt des in einer Nut eingelegten Anschlagrings mit kreisrundem Querschnitt kann auch ein Anschlagring mit halbkreisförmigen Querschnitt auf dem Außenumfang der Kolbenstange (5) in geeigneter Weise, z.B. durch Schweißen oder dergleichen, befestigt sein.

Ferner müssen der Anschlagring (9) und die Anschlagschulter (11) nicht zwangsweise eine Kreis- oder Schalenform haben. Es ist auch eine prismatische Formgebung möglich, wobei im Anlagebereich schräg zur Zylinderachse (15) ausgerichtete Anschlagflächen am Ring (9) und an der Anschlagschulter (11) vorhanden sind, um radiale Richtungskomponenten der Belastung und Kraftaufnahme zu ermöglichen.

### BEZUGSZEICHENLISTE

- 1: Stoßdämpfer
- 2: Gehäuseteil
- 3: Gehäuseteil
- 4: Zylinder
- 5: Kolbenstange
- 6: Kolbenanordnung, Kolben
- 7: Kolbenstangenführung
- 8: Anschlag
- 9: Anschlagring, Federring
- 10: Nut in Kolbenstange
- 11: Anschlagschulter
- 12: Deformationszone
- 13: Ausnehmung
- 14: Führungsfläche
- 15: Zylinderachse
- 16: Anschluss oben
- 17: Anschluss unten
- 18: Erweiterung
- 19: Teilbereich

## Patentansprüche

1. Stoßdämpfer für Fahrzeuge, insbesondere Schwerlastfahrzeuge, mit einem Zylinder (4), einer Kolbenanordnung (6), einer Kolbenstange (5), einer Kolbenstangenführung (7) und einem Anschlag (8) zur Begrenzung der Ausziehbewegung der Kolbenstange (5), wobei der Anschlag (8) einen auf der Kolbenstange (5) befindlichen Anschlagring (9) aufweist, der an der Kolbenstangenführung (7) anschlägt, **dadurch gekennzeichnet, dass** der Anschlag (8) eine Anschlagschulter (11) an der Kolbenstangenführung (7) aufweist, die mit dem Anschlagring (9) zusammenwirkt, wobei die Kolbenstangenführung (7) zwischen der Anschlagschulter (11) und einer Führungsfläche (14) für die Kolbenstange (5) eine ringförmige Deformationszone (12) mit einer Ausnehmung (13) aufweist, welche im Überlastfall eine Verformung der Anschlagschulter (11) unter Aufnahme axialer Kräfte ermöglicht.

2. Stoßdämpfer nach Anspruch 1, **dadurch gekennzeichnet, dass** die Anschlagschulter (11) eine an die Außenform des Anschlagrings (9) angepasste Schalenform aufweist.

3. Stoßdämpfer nach Anspruch 1 oder 2, **dadurch gekennzeichnet, dass** die Schalenform der Anschlagschulter (11) der Außenform des Anschlagrings (9) entspricht.

4. Stoßdämpfer nach Anspruch 1 oder 2, **dadurch gekennzeichnet, dass** die Schalenform der Anschlagschulter (11) der Außenform des Anschlagrings (9) bereichsweise (19) entspricht, wobei die Schalenform zur Kolbenachse hin eine kleine Erweiterung (18) mit einer flacheren Krümmung aufweist.

5. Stoßdämpfer nach einem der vorhergehenden Ansprüche, **dadurch gekennzeichnet, dass** die Anschlagschulter (11) eine gerundete Schalenform und der Anschlagring (9) eine gerundete Außenform aufweisen.

6. Stoßdämpfer nach einem der vorhergehenden Ansprüche, **dadurch gekennzeichnet, dass** die Schalenform der Anschlagschulter (11) weniger als 1/4 des Umfangs des Anschlagrings (9) bedeckt.

7. Stoßdämpfer nach einem der vorhergehenden Ansprüche, **dadurch gekennzeichnet, dass** der Anschlagring (9) einen kreisförmigen oder halbkreisförmigen Querschnitt aufweist.

8. Stoßdämpfer nach einem der vorhergehenden Ansprüche, **dadurch gekennzeichnet, dass** die ringförmige Ausnehmung (13) unmittelbar vor der Führungsfläche (14) angeordnet ist.

9. Stoßdämpfer nach einem der vorhergehenden Ansprüche, **dadurch gekennzeichnet, dass** die Ausnehmung (13) im Querschnitt eine Stufenform aufweist.

10. Stoßdämpfer nach einem der vorhergehenden Ansprüche, **dadurch gekennzeichnet, dass** die Ausnehmung (13) die Anschlagschulter (11) von der Führungsfläche (14) axial und radial distanziert.

11. Stoßdämpfer nach einem der vorhergehenden Ansprüche, **dadurch gekennzeichnet, dass** der Anschlagring (9) als Federring ausgebildet ist.

12. Stoßdämpfer nach einem der vorhergehenden Ansprüche, **dadurch gekennzeichnet, dass** der Anschlagring (9) in einer umfangseitigen Nut (10) der Kolbenstange (5) angeordnet ist.

## Claims

1. Shock absorbers for vehicles, in particular heavy goods vehicles, with a cylinder (4), a piston arrangement (6), a piston rod (5), a piston rod guide (7) and a stop collar (8) for restricting the extension movement of the piston rod (5), wherein the stop collar (8) has a stop collar ring (9) which is located on the piston rod (5) and strikes against the piston rod guide (7), **characterized in that** the stop collar (8) has a stop collar shoulder (11) on the piston rod guide (7), said stop collar shoulder interacting with the stop collar ring (9), the piston rod guide (7) having, between the stop collar shoulder (11) and a guide surface (14) for the piston rod (5), an annular deformation zone (12) with a recess (13) which, in the event of an overload, permits deformation of the stop collar shoulder (11) with axial forces being absorbed.

2. Shock absorber according to Claim 1, **characterized in that** the stop collar shoulder (11) has a shell shape matched to the outer shape of the stop collar ring (9).

3. Shock absorber according to Claim 1 or 2, **characterized in that** the shell shape of the stop collar shoulder (11) corresponds to the outer shape of the stop collar ring (9).

4. Shock absorber according to Claim 1 or 2, **characterized in that** the shell shape of the stop collar shoulder (11) corresponds in some regions (19) to the outer shape of the stop collar ring (9), the shell shape having a small expanded portion (18) with a shallower curvature towards the piston axis.

5. Shock absorber according to one of the preceding claims, **characterized in that** the stop collar shoulder (11) has a rounded shell shape and the stop collar ring (9) has a rounded outer shape.

6. Shock absorber according to one of the preceding claims, **characterized in that** the shell shape of the stop collar shoulder (11) covers less than 1/4 of the circumference of the stop collar ring (9).

7. Shock absorber according to one of the preceding claims, **characterized in that** the stop collar ring (9) has a circular or semicircular cross section.

8. Shock absorber according to one of the preceding claims, **characterized in that** the annular recess (13) is arranged directly upstream of the guide surface (14).

9. Shock absorber according to one of the preceding claims, **characterized in that** the recess (13) has a step shape in cross section.

10. Shock absorber according to one of the preceding claims, **characterized in that** the recess (13) spaces the stop collar shoulder (13) axially and radially from the guide surface (14).

11. Shock absorber according to one of the preceding claims, **characterized in that** the stop collar ring (9) is designed as a spring ring.

12. Shock absorber according to one of the preceding claims, **characterized in that** the stop collar ring (9) is arranged in a circumferential groove (10) of the piston rod (5).

## Revendications

1. Amortisseur pour véhicules, notamment pour poids lourds, doté d'un cylindre (4), d'un ensemble piston (6), d'une tige de piston (5), d'un guide de tige de piston (7) et d'une butée (8) pour limiter le mouvement de retrait de la tige de piston (5), la butée (8) comportant une bague de butée (9) se trouvant sur la tige de piston (5), ladite bague butant contre le guide de tige de piston (7), **caractérisé en ce que** la butée (8) comporte un épaulement de butée (11) au niveau du guide de tige de piston (7) qui entre en interaction avec la bague de butée (9), le guide de tige de piston (7) comportant une zone de déformation (12) de forme annulaire entre l'épaulement de butée (11) et une surface de guidage (14) de la tige de piston (5) dotée d'un évidement (13) permettant une déformation de l'épaulement de butée (11) par absorption des forces axiales en cas de surcharge.

2. Amortisseur selon la revendication 1, **caractérisé en ce que** l'épaulement de butée (11) présente une forme de coque adaptée à la forme extérieure de la bague de butée (9).

3. Amortisseur selon la revendication 1 ou 2, **caractérisé en ce que** la forme de coque de l'épaulement de butée (11) correspond à la forme extérieure de la bague de butée (9).

4. Amortisseur selon la revendication 1 ou 2, **caractérisé en ce que** la forme de coque de l'épaulement de butée (11) correspond sur certaines zones (19) à la forme extérieure de la bague de butée (9), la forme de coque comportant un petit élargissement (18) en direction de l'axe de piston avec une courbure plus plate.

5. Amortisseur selon l'une quelconque des revendications précédentes, **caractérisé en ce que** l'épaulement de butée (11) présente une forme de coque arrondie et que la bague de butée (9) comporte une forme extérieure arrondie.

6. Amortisseur selon l'une quelconque des revendications précédentes, **caractérisé en ce que** la forme de coque de l'épaulement de butée (11) couvre moins d'1/4 du périmètre de la bague de butée (9).

7. Amortisseur selon l'une quelconque des revendications précédentes, **caractérisé en ce que** la bague de butée (9) présente une section transversale de forme circulaire ou semi-circulaire.

8. Amortisseur selon l'une quelconque des revendications précédentes, **caractérisé en ce que** l'évidement (13) de forme annulaire est disposé directement avant la surface de guidage (14).

9. Amortisseur selon l'une quelconque des revendications précédentes, **caractérisé en ce que** l'évidement (13) présente une forme en palier dans sa section transversale.

10. Amortisseur selon l'une quelconque des revendications précédentes, **caractérisé en ce que** l'évidement (13) maintient l'épaulement de butée (11) à distance par rapport à la surface de guidage (14) sur le plan axial et radial.

11. Amortisseur selon l'une quelconque des revendications précédentes, **caractérisé en ce que** la bague de butée (9) prend la forme d'une bague à ressort.

12. Amortisseur selon l'une quelconque des revendications précédentes, **caractérisé en ce que** la bague de butée (9) est disposée dans une rainure périphérique (10) de la tige de piston (5).
